# FASCICULE DE BREVET EUROPEEN

(11) **EP 3 106 957 B1**
(45) Date de publication et mention de la délivrance du brevet: **29.07.2020**
(21) Numéro de dépôt: 16174797.7
(22) Date de dépôt: 16.06.2016
(51) Int. Cl.: G05D 16/06

(54) **RÉGULATEUR DE PRESSION ET SYSTÈME DE PULVÉRISATION ASSOCIÉ**
DRUCKREGLER UND ENTSPRECHENDES SPRÜHSYSTEM
PRESSURE REGULATOR AND ASSOCIATED SPRAY SYSTEM

(30) Priorité: 16.06.2015 FR 1555503
(43) Date de publication de la demande: 21.12.2016
(73) Titulaire: EXEL INDUSTRIES, 51200 Epernay (FR)
(72) Inventeur: LAVILLE, Laetitia, 69400 VILLEFRANCHE SUR SAONE (FR); BARON, Sébastien, 01600 TREVOUX (FR)
(74) Mandataire: CSY London

(56) Documents cités:
- EP-A2- 1 672 458
- US-A1- 2004 168 723

## Description

L'invention concerne un régulateur de pression d'un fluide et un système de pulvérisation qui comporte un tel régulateur de pression.

Dans le domaine de la pulvérisation d'un fluide, tel que de l'eau, il est connu d'utiliser un régulateur de pression disposé entre un réservoir de fluide et une buse de pulvérisation du fluide, afin de réguler la pression du fluide pulvérisé. Le régulateur de pression permet de délivrer un fluide de pression constante à la buse de pulvérisation et est, par exemple, intégré dans un système de pulvérisation, tel qu'un nettoyeur haute pression.

Il est ainsi connu de EP-A2-1 672 458 un régulateur de pression qui comporte un dispositif de régulation de la pression d'un fluide et un corps principal muni d'une entrée de réception du fluide, d'un logement de réception du dispositif de régulation et d'une sortie de distribution du fluide. Dans un tel régulateur, le dispositif de régulation est positionné entre l'entrée et la sortie et permet de réguler la pression du fluide distribué sur la sortie. Le dispositif de régulation comprend notamment deux moyens de réglage de la pression du fluide, à savoir un premier moyen de réglage permettant d'activer ou non la régulation de pression et un deuxième moyen de réglage permettant de choisir la pression de sortie du fluide parmi deux valeurs prédéterminées.

Cependant, la structure d'un tel régulateur reste complexe, tandis que le réglage de la pression du fluide délivré en sortie reste difficile à réaliser.

C'est à ces inconvénients qu'entend plus particulièrement remédier l'invention en proposant un régulateur de pression dont la structure est simplifiée et pour lequel le réglage de la pression du fluide délivré en sortie est facilité.

A cet effet, l'invention a pour objet un régulateur de pression comprenant un dispositif de régulation de la pression d'un fluide et un corps principal comportant une entrée de réception du fluide, une paroi circonférentielle délimitant un logement de réception du dispositif de régulation et une sortie de distribution du fluide, le dispositif de régulation étant positionné dans le logement entre l'entrée et la sortie et comportant :
- un corps de siège définissant un orifice de passage du fluide,
- un clapet mobile par rapport au corps de siège, suivant un axe central du corps de siège, entre une position fermée dans laquelle le clapet obstrue l'orifice et une position ouverte dans laquelle le clapet libère l'orifice,
- une membrane mécaniquement solidaire du clapet,
- un ressort d'appui de la membrane contre le corps de siège, propre à exercer un effort d'appui sur la membrane, la membrane étant mobile par rapport au corps de siège entre une position ouverte, dans laquelle la membrane définit avec le corps de siège un espace de passage du fluide ayant traversé l'orifice de passage, propre à guider le fluide vers la sortie, et une position fermée dans laquelle la membrane est en contact étanche avec le corps de siège et obstrue l'espace de passage, et
- un organe de réglage de la pression du fluide, l'organe de réglage comprenant un culot comportant une paroi de contact s'étendant radialement à l'axe central et en contact avec le ressort, le ressort étant positionné entre la membrane et la paroi de contact.

Conformément à l'invention, l'organe de réglage comprend une pièce de réglage de la position du culot par rapport au corps de siège, la pièce de réglage définissant au moins deux positions de maintien du culot par rapport au corps de siège, décalées l'une par rapport à l'autre suivant l'axe central et correspondant à deux positions différentes de la paroi de contact par rapport au corps de siège et de plus le culot comprend une jupe s'étendant suivant l'axe central et disposée entre la paroi circonférentielle et le corps de siège, et, pour l'une des positions de maintien du culot, la jupe définit avec la paroi circonférentielle ou le corps de siège un espace de circulation de fluide reliant l'entrée à la sortie.

Grâce à l'invention, la structure du régulateur et le réglage de la pression du fluide délivré en sortie sont simplifiés. En effet, le fait que la pièce de réglage définisse au moins deux positions de maintien du culot, correspondant à deux positions différentes de la paroi de contact par rapport au corps de siège, permet de régler la pression du fluide délivré en sortie simplement en déplaçant le culot par rapport à la pièce de réglage, sans avoir à séparer le culot du reste du régulateur de pression. Il n'est donc pas nécessaire que le culot et la pièce de réglage soient montés amovibles par rapport au reste du régulateur de pression.

Selon des aspects avantageux mais non obligatoires de l'invention, un tel régulateur de pression comprend une ou plusieurs des caractéristiques suivantes, prises isolément ou selon toutes les combinaisons techniquement admissibles :
- la pièce de réglage définit au moins trois positions de maintien du culot décalées les unes par rapport aux autres suivant l'axe central, et, pour deux des positions de maintien du culot, la jupe est en contact étanche avec la paroi circonférentielle et le corps de siège via des moyens d'étanchéification ;
- les moyens d'étanchéification comprennent un premier et un deuxième joints d'étanchéité, le corps de siège étant muni d'une première gorge périphérique de réception du premier joint d'étanchéité, qui est propre à être en appui contre la jupe, et la jupe étant munie d'une deuxième gorge périphérique de réception du deuxième joint d'étanchéité, qui est propre à être en appui contre la paroi circonférentielle ;

- le ressort est configuré pour que, pour une distance donnée sur laquelle s'étend le ressort entre la membrane et la paroi de contact, le clapet mobile soit en position fermée et la membrane en position ouverte lorsque le fluide exerce sur le clapet mobile et la membrane un effort supérieur à une première valeur de seuil prédéterminée, et pour que la membrane soit en position fermée et le clapet mobile en position ouverte lorsque le fluide exerce sur le clapet mobile et la membrane un effort inférieur à une deuxième valeur de seuil prédéterminée, la première valeur de seuil prédéterminée étant supérieure à la deuxième valeur de seuil prédéterminée ;
- le corps de siège est une pièce distincte du corps principal ;
- la pièce de réglage est mécaniquement solidaire du corps de siège et le culot est mobile par rapport à la pièce de réglage ;
- le culot ou respectivement la pièce de réglage comprend un pion s'étendant radialement à la jupe, alors que la pièce de réglage ou respectivement le culot comprend un contour périphérique munie d'une rainure de guidage du pion à l'intérieur de laquelle le pion est positionné, et la rainure définit les positions de maintien, le pion étant déplaçable dans la rainure de guidage entre les différentes positions de maintien ;
- l'organe de réglage comprend un bouton de modification de la position du culot mécaniquement solidaire du culot ;
- la rainure comprend une extrémité ouverte vers l'extérieur de la pièce de réglage suivant l'axe central, en regard du bouton, alors que le corps principal comprend une languette s'étendant radialement à la paroi circonférentielle, le bouton comprenant une fente de réception de la languette à l'intérieur de laquelle la languette est positionnée, et lorsque le pion est positionné au niveau de l'extrémité ouverte, la languette est en contact avec un bord de la fente qui maintien le bouton en position ;
- la rainure de guidage comprend un côté formant plusieurs surface de maintien du pion décalées les unes par rapport aux autres suivant l'axe central, chaque surface de maintien définissant l'une des positions de maintien du culot, dans laquelle le pion est en contact avec ladite surface de maintien.

L'invention concerne également un système de pulvérisation comprenant un réservoir de fluide, une buse de pulvérisation du fluide et un régulateur de pression monté entre le réservoir de fluide et la buse de pulvérisation. Conformément à l'invention, le régulateur de pression est tel que défini ci-dessus.

L'invention sera mieux comprise et d'autres avantages de celle-ci apparaîtront plus clairement à la lumière de la description qui va suivre, donnée uniquement à titre d'exemple non limitatif et faite en se référant aux dessins annexés sur lesquels :
- la figure 1 est une représentation schématique d'un système de pulvérisation qui comprend un régulateur de pression conforme à l'invention ;
- la figure 2 est une représentation en perspective du régulateur de pression du système de la figure 1 ;
- la figure 3 est une vue en perspective éclatée du régulateur de pression de la figure 2 ;
- la figure 4 est une coupe du régulateur de pression suivant le plan IV à la figure 2 ;
- la figure 5 est une représentation en perspective partielle avec arrachement du régulateur de pression des figures 2 à 4 dans une première configuration ; et
- la figure 6 est une représentation analogue à la figure 5 du régulateur de pression dans une deuxième configuration.

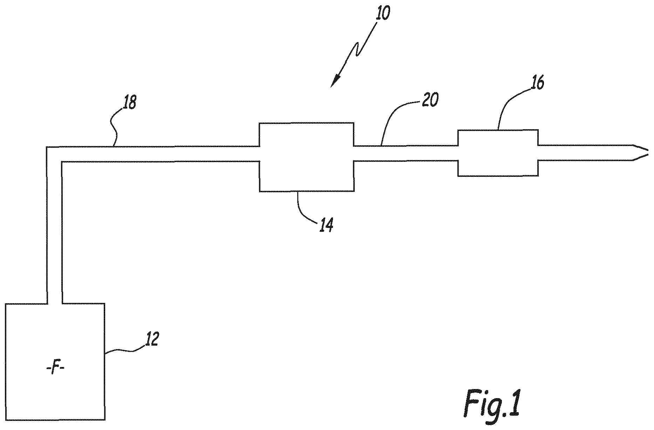

Le système de pulvérisation 10 visible à la figure 1 comprend un réservoir 12 de fluide F, un régulateur de pression 14 conforme à un premier mode de réalisation de l'invention et une buse de pulvérisation 16.

Le système de pulvérisation comprend également un premier conduit 18 propre à transmettre le fluide F du réservoir 12 vers le régulateur de pression 14 et un deuxième conduit 20 propre à transmettre le fluide F ayant traversé le régulateur de pression 14 à la buse de pulvérisation 16.

Le système de pulvérisation 10 est, par exemple, un nettoyeur haute pression et le fluide F est, par exemple, de l'eau.

Le régulateur de pression 14 est propre à réguler la pression du fluide F en provenance du réservoir 12 et du premier conduit 18 et à délivrer à la buse de pulvérisation 16, via le deuxième conduit 20, le fluide F à une pression régulée.

En d'autres termes, le régulateur de pression 14 est monté entre, d'une part, le réservoir de fluide 12 et le premier conduit 18 et, d'autre part, le deuxième conduit 20 et la buse de pulvérisation 16.

La buse de pulvérisation 16 est configurée pour pulvériser le fluide F. La buse de pulvérisation 16 comprend, par exemple, un organe, non représenté, de commande manuelle de la pulvérisation du fluide F et est propre à pulvériser le fluide F en fonction de la position de l'organe de commande manuelle.

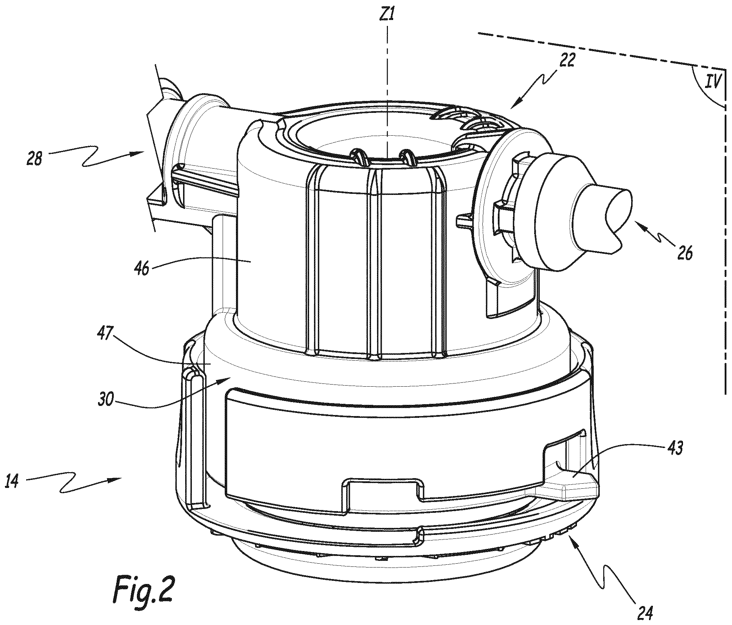

Comme représenté plus en détail aux figures 2 à 6, le régulateur de pression 14 comprend un corps principal 22 et un dispositif 24 de régulation de la pression du fluide F.

Le corps principal 22 comporte une entrée 26 de réception du fluide F et une sortie 28 de distribution du fluide F.

Le corps principal 22 comprend une paroi circonférentielle 30 délimitant un logement 32 de réception du dispositif de régulation 24 centré sur un axe Z1, qui est vertical aux figures 2 à 4.

Le corps principal 22 comprend, suivant l'axe Z1, une extrémité ouverte 34 d'assemblage du dispositif de régulation de la pression 24 avec le corps principal 22 et une extrémité fermée 36.

Le corps principal 22 comprend une première partie 40 d'amenée du fluide F reçu sur l'entrée 26 dans le logement 32 et une deuxième partie 42 reliant le logement 32 à la sortie 28.

Le corps principal 22 comprend en outre une languette 43 s'étendant radialement à la paroi circonférentielle 30. La languette 43 est en saillie du reste du corps principal 22, vers l'extérieur du corps principal 22, c'est-à-dire dans une direction opposée à l'axe Z1.

L'entrée 26 comprend des moyens, non représentés, de connexion du corps principal 22 au premier conduit 18.

La sortie 28 comprend un embout 44 de fixation au deuxième conduit 20.

La paroi circonférentielle 30 relie l'extrémité ouverte 34 et l'extrémité fermée 36.

La paroi circonférentielle 30 définit une première portion de cylindre 46 et une deuxième portion de cylindre 47.

Suivant l'axe Z1, la première portion de cylindre 46 s'étend entre l'extrémité fermée 36 et la deuxième portion de cylindre 47, tandis que la deuxième portion de cylindre 47 s'étend entre la première portion de cylindre 46 et l'extrémité ouverte 34.

Le diamètre de la première portion de cylindre 46 est inférieur au diamètre de la deuxième portion de cylindre 47.

Le dispositif de régulation 24 est positionné dans le logement 32 entre l'entrée 26 et la sortie 28.

Le dispositif de régulation 24 comprend un corps de siège 48, un clapet 50 mobile par rapport au corps de siège 48 suivant un axe central Z1 du corps du siège 48 et une membrane 52 mécaniquement solidaire du clapet 50.

L'axe central Z1 s'étend sensiblement parallèlement à l'axe Z1, est confondu avec l'axe Z1 sur les figures 2 à 6 et porte la même référence par la suite.

Le dispositif de régulation 24 comprend également un tampon 54, un ressort 56 d'appui de la membrane 52 contre le corps de siège 48 et un organe 58 de réglage de la pression du fluide F définissant un espace 60 de réception du ressort 56.

Le corps de siège 48 comprend un premier siège 62 qui définit un orifice 64 de passage du fluide F et qui est associé au clapet mobile 50. Plus précisément le premier siège 62 entoure l'orifice de passage 64.

Le corps de siège 48 comprend un deuxième siège 66 associé à la membrane 52.

Le corps de siège 48 comprend une paroi périphérique 70, qui délimite une zone 72 de réception de la membrane 52 et d'une extrémité de l'organe de réglage 58. La paroi périphérique 70 est de forme cylindrique.

Le corps de siège 48 comprend, le long de la paroi périphérique 70, une gorge périphérique 76 de réception d'un premier joint d'étanchéité 78 propre à être en appui contre l'organe de réglage 58. Le premier joint d'étanchéité 78 est un joint torique, par exemple, en élastomère.

Le corps de siège 48 comprend également, au niveau de la paroi périphérique 70, un orifice traversant 79, suivant une direction radiale à l'axe central Z1, qui est relié à la sortie 28.

Le corps de siège 48 est une pièce distincte du corps principal 22. Il n'est donc pas monobloc avec le corps principal 22.

Le corps de siège 48 est mécaniquement solidaire du corps principal 22. Il est, par exemple, soudée au corps principal 22.

Le clapet 50 est mobile entre une position fermée dans laquelle le clapet 50 obstrue l'orifice 64 et est en contact étanche avec le premier siège 62 et une position ouverte dans laquelle le clapet 50 libère l'orifice 64.

Le clapet 50 comprend une extrémité amont 80, une extrémité aval 82 et une tige 84, qui relie l'extrémité amont 80 à l'extrémité aval 82.

L'extrémité amont 80 est de forme adaptée pour venir en appui contre le premier siège 62, afin d'obstruer l'orifice de passage 64 lorsque le clapet 50 est en position fermée.

L'extrémité aval 82 comprend un renflement 85 destiné à coopérer avec le tampon 54 afin d'être fixée au tampon 54.

La tige 84 s'étend à travers l'orifice de passage 64.

La membrane 52 est mécaniquement solidaire du clapet 50.

La membrane 52 est mobile entre, une position ouverte, dans laquelle la membrane 52 définit avec le deuxième siège 66 un espace 86 de passage du fluide F ayant traversé l'orifice de passage 64, et une position fermée, dans laquelle la membrane 52 est en contact étanche avec le deuxième siège 66 et obstrue l'espace de passage 86.

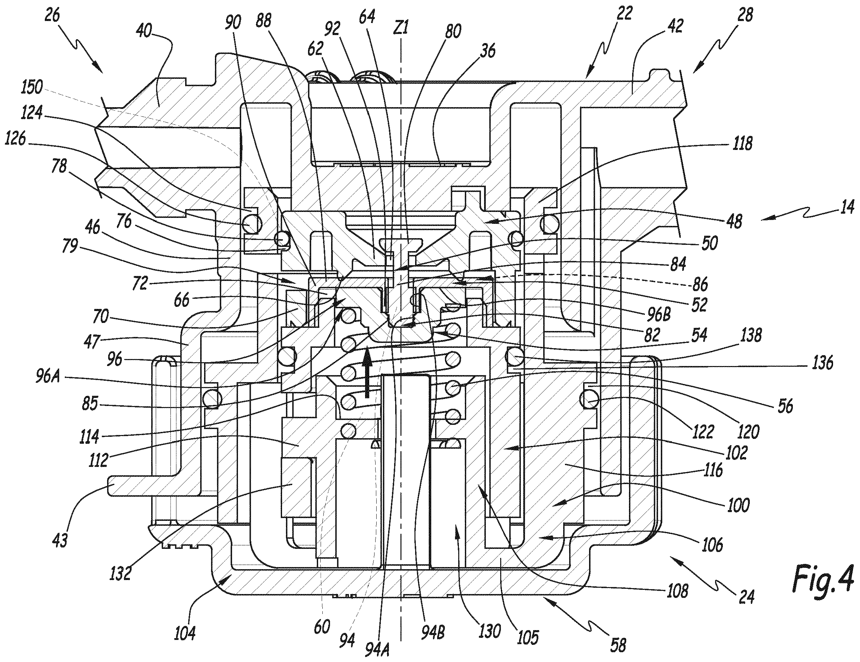

Sur la figure 4, la membrane 52 est représentée en position fermée.

L'orifice de passage 64 est centré sur l'axe central Z1. Le fluide F traverse l'orifice de passage 64 parallèlement à l'axe central Z1 et l'espace de passage 86 sensiblement radialement à l'axe central Z1.

La membrane 52 comprend un voile 88 d'appui contre le deuxième siège 66, s'étendant radialement à l'axe central Z1.

La membrane 52 comprend également une paroi cylindrique externe 90 et une paroi cylindrique interne 92, qui s'étendent depuis le voile d'appui 88 en direction de l'extrémité ouverte 34.

La membrane 52 est, par exemple, en élastomère.

Le voile d'appui 88 est propre à venir en appui contre le deuxième siège 66, sous l'effet d'un effort d'appui E1 exercé par le ressort 56 sur la membrane 52, en direction du deuxième siège 66.

L'effort d'appui E1 est exercé dans un sens opposé à un sens de l'écoulement du fluide F à travers le dispositif de régulation 24, au niveau de l'orifice 34.

La paroi cylindrique externe 90 est coincée, radialement à l'axe central Z1, entre la paroi périphérique 70 et l'organe de réglage 58.

La paroi cylindrique interne 92 est coincée radialement à l'axe central Z1, entre le tampon 54 et l'extrémité aval 82, de sorte à être mécaniquement solidaire du clapet mobile 50 et du tampon 54.

Ainsi, la membrane 52 assure l'étanchéité entre le corps de siège 48 et l'espace 60 de réception du ressort 56, grâce au voile d'appui 88 et au coincement de la paroi cylindrique externe 90 entre la paroi périphérique 70 et l'organe de réglage 58 et de la paroi cylindrique interne 92 entre le tampon 54 et l'extrémité aval 82.

Le tampon 54 fait l'interface entre, d'une part, le ressort 56 et, d'autre part, la membrane 52 et notamment le voile d'appui 88.

Le tampon 54 comprend un logement 94 de réception de l'extrémité aval 82 et de la paroi cylindrique interne 92 et une aile 96 de contact avec le voile d'appui 88.

Le tampon 54 est propre à transmettre l'effort d'appui E1 à la membrane 52 et au clapet 50.

Le logement 94 comprend, suivant l'axe central Z1, en direction de l'extrémité ouverte 34, une première partie cylindrique 94A et une deuxième partie cylindrique 94B prolongeant la première partie cylindrique 94A.

La deuxième partie cylindrique 94B reçoit un bout de l'extrémité aval 82 et coopère avec le renflement 85, afin de solidariser mécaniquement le clapet 50 au tampon 54.

La première partie cylindrique 94A a un diamètre supérieur à celui de la deuxième partie cylindrique 94B et reçoit l'extrémité aval 84 et la paroi cylindrique interne 92, qui est mécaniquement solidarisée au tampon 54 et au clapet mobile 50 par coincement entre l'extrémité aval 82 et une paroi interne de la première partie cylindrique 94A.

L'aile de contact 96 comprend une face de contact 96A avec le ressort 56, sur laquelle le ressort 56 exerce l'effort d'appui E1. La face de contact 96A est en contact avec le ressort 56.

L'aile de contact 96 comprend également à l'opposé de la face de contact 96A, une autre face de contact 96B avec le voile d'appui 88.

Le ressort 56 est propre à exercer l'effort d'appui E1 sur la membrane 52 et le clapet 50 à travers le tampon 54.

Le ressort 56 est positionné suivant l'axe central Z1 entre la face de contact 96A et l'organe de réglage 58 et exerce l'effort d'appui E1 sur le tampon 54 qui le transmet à la membrane 52 et au clapet 50.

Plus précisément, le ressort 56 est positionné dans l'espace de réception 60 et est coincé entre la face de contact 96A et l'organe de réglage 58.

Le ressort 56 est configuré pour que, pour une distance donnée sur laquelle s'étend le ressort entre la face de contact 96A et l'organe de réglage 58, le clapet mobile 50 soit en position fermée et la membrane 52 en position ouverte lorsque le fluide F exerce sur le clapet mobile 50 et la membrane 52 un effort, suivant l'axe central Z1, supérieur à une première valeur de seuil prédéterminée. De même, le ressort 56 est configuré pour que, pour une distance donnée sur laquelle s'étend le ressort entre la face de contact 96A et l'organe de réglage 58, la membrane 52 soit en position fermée et le clapet mobile 50 en position ouverte lorsque le fluide F exerce sur le clapet mobile 50 et la membrane 52 un effort, suivant l'axe central Z1 inférieur à une deuxième valeur de seuil prédéterminée.

Le ressort 56 est également configuré pour que, pour une distance donnée sur laquelle s'étend le ressort entre la face de contact 96A et l'organe de réglage 58, lorsque le fluide F exerce sur le clapet mobile 50 et la membrane 52 un effort, suivant l'axe central Z1, compris entre la première valeur de seuil prédéterminée et la deuxième valeur de seuil prédéterminée, l'extrémité amont 80 soit distante du premier siège 62 et le voile d'appui 88 soit distant du deuxième siège 66. Dans cette configuration, le fluide F traverse alors l'orifice 64 et l'espace de passage 86.

En d'autres termes, la raideur et/ou la longueur du ressort 56 sont, par exemple, configurées, pour que, pour une distance donnée sur laquelle s'étend le ressort entre la face de contact 96A et l'organe de réglage 58, le clapet mobile 50 et la membrane 52 soient dans les positions présentées ci-dessus en fonction de l'effort exercé par le fluide F sur le clapet mobile 50 et la membrane 52.

La première valeur de seuil prédéterminée est par exemple égale à 13,5 Newton et correspond à une pression du fluide F de 1,2 Bars et est supérieure à la deuxième valeur de seuil prédéterminée, qui est par exemple égale à 11,3 Newton et correspond à une pression du fluide F de 1 Bar, lorsque la distance donnée sur laquelle s'étend le ressort entre la face de contact 96A et l'organe de réglage 58 est égale à 13,6 cm.

L'organe de réglage 58 comprend un culot 100 mobile, suivant l'axe central Z1, par rapport au corps de siège 48 et une pièce 102 de réglage de la position du culot 100 par rapport au corps de siège 48.

L'organe de réglage 58 comprend également un bouton 104 de modification de la position du culot 100 par rapport au corps de siège 48.

Le culot 100 comprend une aile principale 105 en regard de l'extrémité ouverte 34 et une jupe périphérique 106 s'étendant suivant l'axe central Z1 depuis l'aile principale 105 en direction de l'extrémité fermée 36.

Le culot 100 comprend également un fût interne 108 s'étendant suivant l'axe central Z1 depuis l'aile principale 105 vers le corps de siège 48, un pion 112 s'étendant radialement à la jupe 106 et une paroi de contact 114 s'étendant radialement à la jupe 106.

Le ressort 56 est positionné entre le tampon 54 et la paroi de contact 114. Plus précisément, la paroi de contact 114 est en contact avec une extrémité du ressort et la face de contact 96A est en contact avec une autre extrémité du ressort 56.

La jupe 106 est disposée entre la paroi circonférentielle 30 et la paroi périphérique 70. Ainsi, le premier joint d'étanchéité 78 est propre à être en appui contre la jupe périphérique 106

La jupe 106 comprend, par rapport à l'extrémité ouverte 34 et à l'aile principale 105, une partie cylindrique proximale 116 prolongée, suivant l'axe central Z1, par une partie cylindre distale 118.

La partie cylindrique proximale 116 est positionnée en regard de la deuxième portion de cylindre 47 et la partie cylindrique distale 118 est positionnée en regard de la première portion de cylindre 46.

La partie cylindrique proximale 116 est munie d'une gorge périphérique 120 de réception d'un deuxième joint d'étanchéité 122.

La gorge périphérique 120 et le deuxième joint 122 sont positionnés, suivant l'axe central Z1, à proximité de l'extrémité ouverte 34, c'est-à-dire par exemple à 2 cm de l'extrémité ouverte.

Le deuxième joint 122 est propre à être en contact étanche contre une face interne de la deuxième portion de cylindre 47, quelle que soit la position du culot 100. Le deuxième joint 122 assure l'étanchéité entre la paroi circonférentielle 30 et la jupe 106 vis-à-vis, d'une part, de l'environnement extérieur du régulateur de pression 14 et notamment de l'air entourant le régulateur de pression 14 et, d'autre part, du fluide ayant traversé l'espace de passage 86 et l'orifice traversant 79 et circulant en direction de la sortie 28.

La partie cylindrique distale 118 est munie d'une gorge périphérique 124 de réception d'un troisième joint d'étanchéité 126.

La gorge périphérique 124 et le troisième joint 126 sont positionnés, suivant l'axe central Z1, à proximité du premier joint 78.

Le troisième joint 126 est propre à être en contact étanche contre une face interne de la première portion de cylindre 46, quelle que soit la position du culot 100. Le troisième joint assure l'étanchéité entre la paroi circonférentielle 30 et la jupe 106, vis-à-vis du fluide provenant de l'entrée 26 et circulant en direction du corps de siège 48.

Les deuxième 122 et troisième 126 joints sont des joints toriques, par exemple en élastomère.

La pièce de réglage 102 est mécaniquement solidaire du corps de siège 48 et est, par exemple, soudée au corps de siège 48.

La pièce de réglage 102 est positionnée à l'intérieur de la jupe 106.

La pièce de réglage 102 comprend, suivant l'axe central Z1, une première extrémité ouverte 128 en regard de la membrane 52 et une deuxième extrémité ouverte 130 de passage du fût interne 108.

La pièce de réglage 102 comprend également un contour périphérique 132 munie d'une rainure 134 de guidage du pion 112, à l'intérieur de laquelle le pion 112 est positionné et déplaçable.

La pièce de réglage 102 comprend en outre une gorge périphérique externe 136 de réception d'un quatrième joint d'étanchéité 138 propre à être en appui contre une face interne de la jupe 106. Le quatrième joint 138 assure l'étanchéité entre la jupe 106 et la pièce de réglage 102, vis-à-vis du fluide F ayant traversé l'espace de passage 86 et l'orifice traversant 79 et circulant en direction de la sortie 28.

Le quatrième joint 138 est un joint torique, par exemple en élastomère.

Dans l'exemple des figures 2 à 6, la pièce de réglage 102 définit trois positions de maintien du culot par rapport au corps de siège, décalées l'une par rapport à l'autre suivant l'axe central Z1 et correspondant à trois positions différentes de la paroi de contact 114 par rapport au corps de siège 48.

Les trois positions de maintien correspondent chacune à des positions de maintien du culot 100, où le culot 100 est immobilisé par rapport au corps de siège 48, pour lesquelles l'effort d'appui E1 exercé par le ressort 56 sur la membrane 52 et le clapet mobile 50 est différent.

Plus précisément, la rainure de guidage 134 définit les trois positions de maintien du culot 100 qui correspondent à trois positions du pion 112 dans la rainure 134.

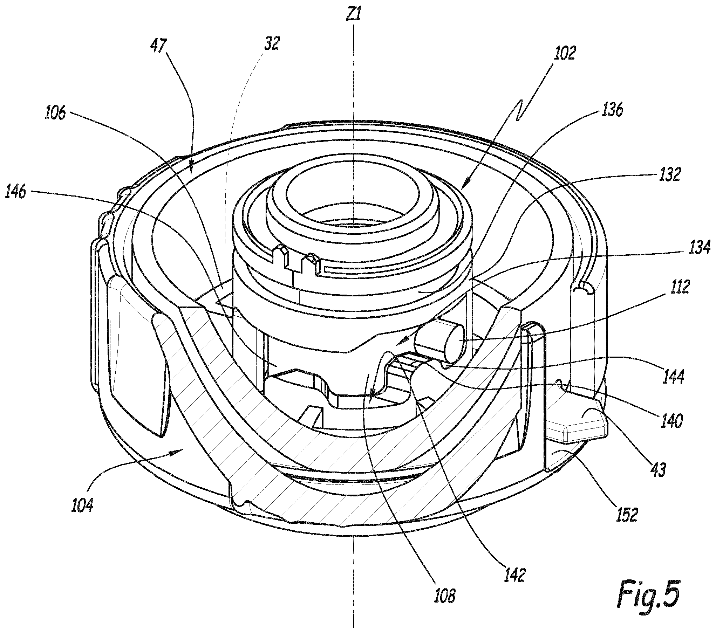

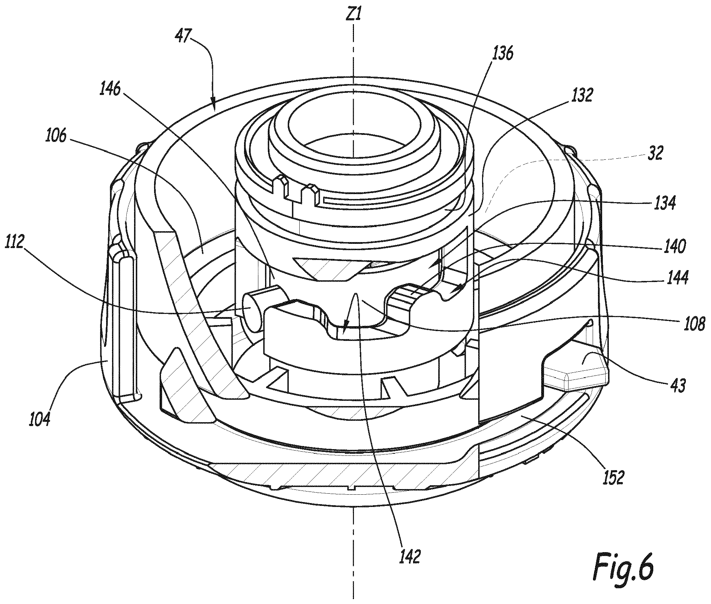

Comme représenté aux figures 5 et 6, La rainure de guidage 134 comprend un côté 140 définissant deux surfaces 142, 144 de maintien du pion 112, qui s'étendent dans un plan perpendiculaire à l'axe central Z1 et qui sont décalées les unes par rapport aux autres suivant l'axe central Z1.

Avantageusement et comme présenté aux figures 5 et 6, le côté 140 a une forme crénelée, de sorte que lorsque le pion 112 est en contact avec l'une des surfaces de maintien 142, 144, le pion 112 est immobilisé et maintenu en contact avec ladite surface de maintien 142, 144.

La rainure de guidage 134 comprend également une extrémité 146 ouverte, suivant l'axe central Z1, vers l'extérieur de la pièce de réglage 102 en regard de l'aile principale 105 et du bouton 104.

La rainure 134 définit ainsi trois positions de maintien du culot décalées l'une par rapport à l'autre, correspondant respectivement au positionnement du pion 112 au niveau de l'extrémité ouverte 146 de la rainure 134, en contact avec la surface de maintien 142 et en contact avec la surface de maintien 144.

En d'autres termes, le pion 112 est déplaçable dans la rainure 134 entre trois positions correspondant respectivement, au positionnement du pion 112 au niveau de l'extrémité ouverte 146 de la rainure 134, en contact avec la surface de maintien 142 et en contact avec la surface de maintien 144.

Lorsque le pion 112 est positionné au niveau de l'extrémité ouverte 146 de la rainure 134, le culot 100 est dans une première position de maintien, présentée à la figure 6, et la jupe 106 et le premier joint d'étanchéité 78 définissent un espace 150 de circulation de fluide reliant l'entrée 26 à la sortie 28. La pression du fluide F n'est alors pas régulée et le fluide F circule librement entre l'entrée 26 et la sortie 28.

Lorsque le pion 112 est positionné au niveau de la surface de maintien 142, le culot 100 est dans une deuxième position de maintien, le premier joint d'étanchéité 78 est en contact étanche contre la jupe 106 du culot 100 et l'effort d'appui E1 a une première valeur prédéterminée. La pression du fluide F est alors régulée à une première grandeur, par exemple égale à 1 Bar.

Lorsque le pion 112 est positionné au niveau de la surface de maintien 144, le culot 100 est dans une troisième position de maintien, présentée à la figure 5, le premier joint d'étanchéité 78 est en contact étanche contre la jupe 106 du culot 100 et l'effort d'appui E1 à une deuxième valeur prédéterminée. La pression du fluide F est alors régulée à une deuxième grandeur supérieure à la première grandeur, par exemple égale à 3 Bars. De façon générale, la deuxième valeur prédéterminée est supérieure à la première valeur prédéterminée.

Le déplacement du pion 112 dans la rainure 134 et donc du culot 100 par rapport au corps de siège 48 permet de comprimer le ressort 56 et ainsi de régler l'effort d'appui E1 exercé par le ressort 56 sur la membrane 52 et le clapet 50.

Le bouton 104 est solidaire du culot 100.

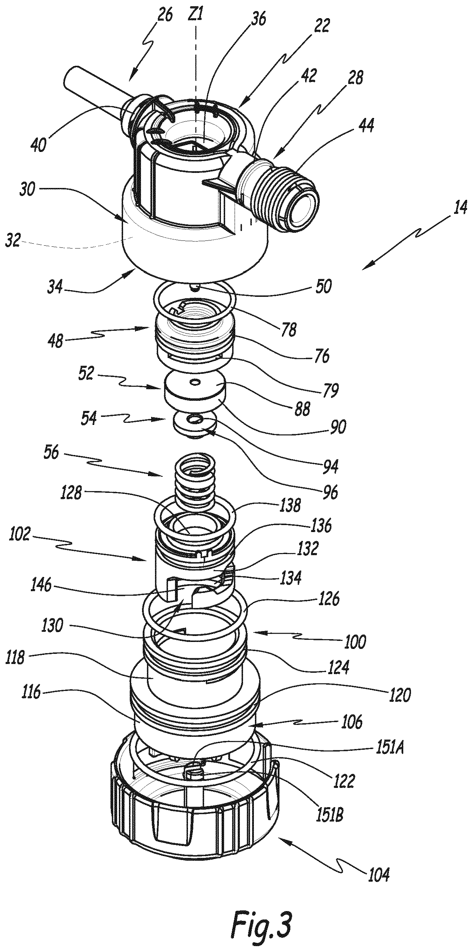

Plus précisément, le bouton 104 est, par exemple, fixé au culot 100 via deux pattes de fixation 151A, 151B, représentées à la figure 3 et s'étendant suivant l'axe central Z1 à travers un orifice traversant la paroi de contact 114. Les pattes de fixation 151A, 151B comprennent, par exemple, des portions, non représentées, de maintien de la position des pattes suivant l'axe central Z1, qui s'étendent radialement à l'axe central Z1 et coopèrent avec la paroi de contact 114.

Le bouton 104 comprend une fente 152 de réception de la languette 43 à l'intérieur de laquelle la languette 43 est positionnée.

La fente 152 a une forme complémentaire de la rainure de guidage 134 de sorte que lorsque le pion 112 se déplace dans la rainure de guidage 134, la languette 43 se déplace dans la fente 152.

Plus précisément, la fente 152 est conformée pour que lorsque le pion 112 est positionné au niveau de l'extrémité ouverte 146 de la rainure guidage 134, la languette 43 soit positionnée en appui contre un bord de la fente 152 qui maintien le bouton 104 en position. Ainsi le pion 112 est maintenu dans la rainure de guidage 134 et le culot 100 reste assemblé avec la pièce de réglage 102.

Le fait que la pièce de réglage 102 définissent plusieurs positions de maintien du culot 100, qui correspondent à des positions différentes de la paroi de contact 114 par rapport au corps de siège 48, permet de régler la pression du fluide délivré en sortie simplement à partir de l'organe de réglage 58 et notamment de la manipulation du bouton 104.

Cela permet de faciliter le réglage de la pression du fluide F en sortie 28, puisqu'il suffit de manipuler le bouton 104 sans séparer le culot 100 du reste du régulateur de pression 14, c'est-à-dire sans désassembler le régulateur de pression et notamment le dispositif de régulation 24 du corps principal 22.

Par ailleurs l'utilisation du pion 112 associé à la rainure de guidage 134 permet de positionner simplement le culot 100 par rapport au corps de siège 48 et de maintenir la position du culot 100 par rapport au corps de siège 48 dans une position désirée.

En outre, le fait que le culot 100 soit propre à être déplacé dans une position où le corps de siège 48 et la jupe 106 définissent un espace de circulation de fluide 150 reliant l'entrée 26 à la sortie 28 permet de désactiver l'utilisation du régulateur de pression 14 et de laisser le fluide F circuler librement entre l'entrée 26 et la sortie 28.

Dans l'exemple des figures 2 à 6, la pièce de réglage 102 définit trois positions de maintien du culot 100 et permet à la fois un réglage de la pression du fluide en sortie entre deux valeurs prédéterminés et l'activation ou la désactivation du régulateur de pression, le tout à partir d'un unique organe de réglage 58 et notamment via la manipulation d'un seul bouton 104. L'utilisation du régulateur de pression 14 est donc simplifiée.

De plus, le fait que le corps de siège 48 soit distinct du corps principal 22 permet de simplifier la structure et la fabrication du corps principal 22.

Par ailleurs, le fait que le corps de siège 48 soit une pièce non monobloc avec le corps principal 22 permet également un assemblage unilatéral, c'est-à-dire par un seul côté, des différents éléments composant le dispositif de régulation 24 dans l'espace de réception 60. Ainsi, il n'est pas nécessaire que les deux extrémités du corps principal suivant l'axe Z1 soit ouverte, et une ouverture d'un seul côté, c'est-à-dire au niveau de la seule extrémité 34 est nécessaire, l'extrémité 36 est fermée.

En outre, l'utilisation du joint d'étanchéité 78 entre le corps de siège 48 et la paroi circonférentielle 30 permet de faciliter l'assemblage du corps de siège 48 sur le corps principal 22 et de garantir une étanchéité entre la paroi circonférentielle 30 et la paroi périphérique 70.

Le corps de siège 48, clapet mobile 50, membrane 52 et le ressort 56 permettent de garantir la régulation de la pression du fluide délivré sur la sortie 28. En effet, le corps de siège 48, le clapet mobile 50, la membrane 52 et le ressort 56 permettent de délivrer sur la sortie 28 un fluide à pression constante, dont la pression dépend des caractéristiques du ressort 56, telles que la raideur et la longueur du ressort, ainsi que de la distance, mesurée suivant l'axe central Z1, entre la paroi de contact 114 et la face de contact 96A.

De plus, l'ensemble des joints d'étanchéité et le fait que la membrane 52 assure l'étanchéité de l'espace de réception 60 vis-à-vis du fluide ayant traversé l'orifice de passage 64, permettent d'avoir une régulation précise de la pression lorsque le pion est en contact avec l'une des surfaces de maintien, puisque le fluide s'écoule seulement à travers l'orifice de passage 64, l'espace de passage 86 et l'orifice traversant 79. Ainsi, c'est principalement l'effort d'appui E1 appliqué par le ressort 56 qui détermine la pression du fluide en sortie 28.

Ainsi, l'orifice de passage 64, l'espace de passage 86 et l'orifice traversant 79 définissent un conduit de circulation de fluide reliant l'entrée 26 à la sortie 28 et permettent de délivrer le fluide F à pression régulée sur la sortie 28, tandis que la membrane 52 forme une paroi étanche dudit conduit de circulation.

Enfin, la fente 152 et la languette permettent d'optimiser le déplacement suivant l'axe central Z1 du culot 100 pour une pièce de réglage 102 de hauteur prédéterminée suivant l'axe central Z1. En effet, cela permet de positionner le pion 112 au niveau de l'extrémité ouverte 146 tout en maintenant le pion 112 positionné dans la rainure 134.

Dans une variante non représentée, la pièce de réglage 102 comprend le pion alors que le culot 100 comprend la rainure de guidage.

Selon une autre variante, le premier joint d'étanchéité 78 est en contact étanche contre la jupe, quelle que soit la position du culot 100. Dans cette variante, la forme de la paroi circonférentielle 30 est adaptée pour que lorsque le culot 100 est dans la première position de maintien, la jupe 106 et la paroi circonférentielle 30 définissent un espace de circulation de fluide reliant l'entrée 26 à la sortie 28, tandis que lorsque le culot est dans les deuxième et troisième positions, la jupe 106 est en contact étanche avec la paroi circonférentielle 30.

Selon une autre variante, la rainure de guidage 134 définit une seule surface de maintien. Dans cette variante, la rainure de guidage 134 définit alors également deux positions de maintien du culot 100 qui correspondent à deux positions du pion 112 dans la rainure 134. Les deux positions du pion 112 correspondent respectivement au positionnement du pion 112 au niveau de l'extrémité ouverte 146 et en contact avec la seule surface de maintien.

Selon une autre variante, la rainure de guidage 134 définit plus de deux surfaces de maintien.

Selon une autre variante, la rainure de guidage 134 ne comprend pas d'extrémité ouverte 146 et définit deux surfaces de maintien 142, 144.

Selon une autre variante, un échappement d'air est prévu au niveau du culot 100 afin que la modification de la position du culot qui entraîne la compression du ressort 56, n'engendre pas de compression d'air dans l'espace de réception 60.

Selon une autre variante, les différentes positions du culot 100 sont déclenchées par un réglage en rotation hélicoïdale telle une vis. Dans cette variante, le bouton de réglage comprend, par exemple, une paroi circonférentielle propre à être vissée sur la deuxième portion cylindrique 47. Le bouton de réglage est alors propre à exercer un effort de déplacement sur le culot 100, parallèlement à l'axe central Z1, pour déplacer le culot 100 par rapport au corps de siège 48. Les différentes positions de maintien pourront être indiquées par un blocage mécanique, un bruit mécanique, ou encore des indicateurs visuels.

Les modes de réalisation et variantes envisagés ci-dessus sont propres à être combinés entre eux pour donner lieu à d'autres modes de réalisation de l'invention.

## Revendications

1. Régulateur de pression (14) comprenant :
- un dispositif (24) de régulation de la pression d'un fluide et un corps principal (22) comportant une entrée (26) de réception du fluide, une paroi circonférentielle (30) délimitant un logement (32) de réception du dispositif de régulation et une sortie (28) de distribution du fluide, le dispositif de régulation (24) étant positionné dans le logement (32) entre l'entrée (26) et la sortie (28) et comportant :
- un corps de siège (48) définissant un orifice (64) de passage du fluide,
- un clapet (50) mobile par rapport au corps de siège (48), suivant un axe central (Z1) du corps de siège (48), entre une position fermée dans laquelle le clapet (50) obstrue l'orifice (64) et une position ouverte dans laquelle le clapet (50) libère l'orifice (64),
- une membrane (52) mécaniquement solidaire du clapet (50),
- un ressort (56) d'appui de la membrane (52) contre le corps de siège (48), propre à exercer un effort d'appui sur la membrane (52), la membrane étant mobile par rapport au corps de siège (48) entre une position ouverte, dans laquelle la membrane (52) définit avec le corps de siège un espace (86) de passage du fluide ayant traversé l'orifice de passage (64), propre à guider le fluide vers la sortie (28), et une position fermée dans laquelle la membrane (52) est en contact étanche avec le corps de siège (48) et obstrue l'espace de passage (86), et
- un organe (58) de réglage de la pression du fluide, l'organe de réglage (58) comprenant un culot (100) comportant une paroi de contact (114) s'étendant radialement à l'axe central (Z1) et en contact avec le ressort (56), le ressort (56) étant positionné entre la membrane (52) et la paroi de contact (114),
**caractérisé en ce que** l'organe de réglage (58) comprend une pièce de réglage (102) de la position du culot (100) par rapport au corps de siège (48), la pièce de réglage (102) définissant au moins deux positions de maintien du culot (100) par rapport au corps de siège (48), décalées l'une par rapport à l'autre suivant l'axe central (Z1) et correspondant à au moins deux positions différentes de la paroi de contact (114) par rapport au corps de siège (48), et **en ce que** le culot (100) comprend une jupe (106) s'étendant suivant l'axe central (Z1) et disposée entre la paroi circonférentielle (30) et le corps de siège (48) et **en ce que**, pour l'une des positions de maintien du culot (100), la jupe (106) définit avec la paroi circonférentielle (30) ou le corps de siège (48) un espace (150) de circulation de fluide reliant l'entrée (26) à la sortie (28).

2. Régulateur selon la revendication 1, **caractérisé en ce que** la pièce de réglage définit au moins trois positions de maintien du culot (100) décalées les unes par rapport aux autres suivant l'axe central (Z1) et **en ce que**, pour deux des positions de maintien du culot (100), la jupe (106) est en contact étanche avec la paroi circonférentielle (30) et le corps de siège (48) via des moyens d'étanchéification (78, 126).

3. Régulateur selon la revendication 1 ou 2, **caractérisé en ce que** les moyens d'étanchéification comprennent un premier (78) et un deuxième (126) joints d'étanchéité, le corps de siège (48) étant muni d'une première gorge périphérique (76) de réception du premier joint d'étanchéité (78), qui est propre à être en appui contre la jupe (106), et la jupe étant munie d'une deuxième gorge périphérique (124) de réception du deuxième joint d'étanchéité (126), qui est propre à être en appui contre la paroi circonférentielle (30).

4. Régulateur selon l'une quelconque des revendications précédentes, **caractérisé en ce que** le ressort (56) est configuré pour que, pour une distance donnée sur laquelle s'étend le ressort (56) entre la membrane (52) et la paroi de contact (114), le clapet mobile (50) soit en position fermée et la membrane (52) en position ouverte lorsque le fluide exerce sur le clapet mobile (50) et la membrane (52) un effort (E1) supérieur à une première valeur de seuil prédéterminée, et pour que la membrane (52) soit en position fermée et le clapet mobile (50) en position ouverte lorsque le fluide exerce sur le clapet mobile (50) et la membrane (52) un effort (E1) inférieur à une deuxième valeur de seuil prédéterminée, la première valeur de seuil prédéterminée étant supérieure à la deuxième valeur de seuil prédéterminée.

5. Régulateur selon l'une quelconque des revendications précédentes, **caractérisé en ce que** le corps de siège (48) est une pièce distincte du corps principal (22).

6. Régulateur selon l'une quelconque des revendications précédentes, **caractérisé en ce que** la pièce de réglage (102) est mécaniquement solidaire du corps de siège (48) et **en ce que** le culot (100) est mobile par rapport à la pièce de réglage (102).

7. Régulateur selon la revendication 6, **caractérisé en ce que** le culot (100) ou respectivement la pièce de réglage (102) comprend un pion (112) s'étendant radialement à la jupe (106), **en ce que** la pièce de réglage (102) ou respectivement le culot (100) comprend un contour périphérique (132) munie d'une rainure (134) de guidage du pion (112) à l'intérieur de laquelle le pion (112) est positionné, et **en ce que** la rainure (134) définit les positions de maintien, le pion (112) étant déplaçable dans la rainure de guidage (134) entre les différentes positions de maintien.

8. Régulateur selon la revendication 7, **caractérisé en ce que** l'organe de réglage (58) comprend un bouton (104) de modification de la position du culot (100) mécaniquement solidaire du culot (100).

9. Régulateur selon la revendication 8, **caractérisé en ce que** la rainure (134) comprend une extrémité ouverte (146) vers l'extérieur de la pièce de réglage (102) suivant l'axe central, en regard du bouton (104), **en ce que** le corps principal (22) comprend une languette (43) s'étendant radialement à la paroi circonférentielle (30), le bouton (104) comprenant une fente (152) de réception de la languette (43) à l'intérieur de laquelle la languette est positionnée, et **en ce que** lorsque le pion (112) est positionné au niveau de l'extrémité ouverte (146), la languette (43) est en contact avec un bord de la fente (152) qui maintien le bouton (104) en position.

10. Régulateur selon l'une quelconque des revendications 7 à 9, **caractérisé en ce que** la rainure de guidage (134) comprend un côté (140) formant plusieurs surface de maintien (142, 144) du pion décalées les unes par rapport aux autres suivant l'axe central (Z1), chaque surface de maintien (142, 144) définissant l'une des positions de maintien du culot (100), dans laquelle le pion (112) est en contact avec ladite surface de maintien (142, 144).

11. Système de pulvérisation comprenant un réservoir (12) de fluide, une buse (16) de pulvérisation du fluide et un régulateur de pression (14) monté entre le réservoir de fluide (12) et la buse de pulvérisation (16), **caractérisé en ce que** le régulateur de pression (14) est selon l'une quelconque des revendications 1 à 10.

## Patentansprüche

1. Druckregler (14), der Folgendes umfasst:
- eine Vorrichtung (24) zum Regulieren des Drucks eines Fluids und einen Hauptkörper (22) mit einem Eingang (26) zum Aufnehmen von Fluid, einer Umfangswand (30), die eine Kammer (32) zum Aufnehmen der Reguliervorrichtung begrenzt, und einem Ausgang (28) zum Verteilen des Fluids, wobei die Reguliervorrichtung (24) in der Kammer (32) zwischen dem Eingang (26) und dem Ausgang (28) positioniert ist und Folgendes umfasst:
- einen Sitzkörper (48), der ein Loch (64) für die Passage des Fluids definiert,
- ein Ventil (50), das mit Bezug auf den Sitzkörper (48) entlang einer mittleren Achse (Z1) des Sitzkörpers (48) zwischen einer geschlossenen Position, in der das Ventil (50) das Loch (64) versperrt, und einer offenen Position beweglich ist, in der das Ventil (50) das Loch (64) freigibt,
- eine Membran (42) mechanisch einstückig mit dem Ventil (50),
- eine Feder (56) zum Drücken der Membran (52) gegen den Sitzkörper (48), die eine Anlagekraft auf die Membran (52) ausüben kann, wobei die Membran in Bezug auf den Sitzkörper (48) zwischen einer offenen Position, in der die Membran (52) mit dem Sitzkörper einen Raum (86) für die Passage des Fluids definiert, das das Passageloch (64) durchflossen hat, der das Fluid zum Ausgang (28) leiten kann, und einer geschlossenen Position beweglich ist, in der die Membran (52) in dichtem Kontakt mit dem Sitzkörper (48) ist und den Passageraum (86) versperrt, und
- einen Mechanismus (58) zum Regulieren des Drucks des Fluids, wobei der Regelmechanismus (58) einen Sockel (100) mit einer Kontaktwand (114) umfasst, die sich radial zur mittleren Achse (Z1) und in Kontakt mit der Feder (56) erstreckt, wobei die Feder (56) zwischen der Membran (52) und der Kontaktwand (114) positioniert ist,
**dadurch gekennzeichnet, dass** der Regelmechanismus (58) ein Teil (102) zum Regeln der Position des Sockels (100) in Bezug auf den Sitzkörper (48) umfasst, wobei das Regelteil (102) wenigstens zwei Positionen zum Halten des Sockels (100) in Bezug auf den Sitzkörper (48) definiert, entlang der mittleren Achse (Z1) voneinander versetzt und entsprechend wenigstens zwei unterschiedlichen Positionen der Kontaktwand (114) in Bezug auf den Sitzkörper (48), und
dadurch, dass der Sockel (100) eine Schürze (106) umfasst, die sich entlang der mittleren Achse (Z1) erstreckt und zwischen der Umfangswand (30) und dem Sitzkörper (48) angeordnet ist, und dadurch, dass für eine der Positionen zum Halten des Sockels (100) die Schürze (106) mit der Umfangswand (30) oder dem Sitzkörper (48) einen Raum (150) für das Umlaufen von Fluid definiert, der den Eingang (26) mit dem Ausgang (28) verbindet.

2. Regler nach Anspruch 1, **dadurch gekennzeichnet, dass** das Regelteil wenigstens drei Positionen zum Halten des Sockels (100) entlang der mittleren Achse (Z1) voneinander versetzt definiert, und dadurch, dass für zwei der Positionen zum Halten des Sockels (100) die Schürze (106) in dichtem Kontakt mit der Umfangswand (30) und dem Sitzkörper (48) über Dichtungsmittel (78, 126) ist.

3. Regler nach Anspruch 1 oder 2, **dadurch gekennzeichnet, dass** die Dichtungsmittel einen ersten (78) und einen zweiten (126) Dichtungsring umfassen, wobei der Sitzkörper (48) mit einer ersten Umfangsnut (76) zum Aufnehmen des ersten Dichtungsrings (78) ausgestattet ist, der an der Schürze (106) anliegen kann, und wobei die Schürze mit einer zweiten Umfangsnut (124) zum Aufnehmen des zweiten Dichtungsrings (126) ausgestattet ist, der an der Umfangswand (30) anliegen kann.

4. Regler nach einem der vorherigen Ansprüche, **dadurch gekennzeichnet, dass** die Feder (56) so konfiguriert ist, dass, für eine gegebene Distanz, über die sich die Feder (56) zwischen der Membran (52) und der Kontaktwand (114) erstreckt, das bewegliche Ventil (50) in einer geschlossenen Position und die Membran (52) in einer offenen Position ist, wenn das Fluid eine Kraft (E1) auf das bewegliche Ventil (50) und die Membran (52) ausübt, die größer ist als ein erster vorbestimmter Schwellenwert, und so dass die Membran (52) in der geschlossenen Position und das bewegliche Ventil (50) in der offenen Position ist, wenn das Fluid eine Kraft (E1) auf das bewegliche Ventil (50) und die Membran (52) ausübt, die kleiner ist als ein zweiter vorbestimmter Schwellenwert, wobei der erste vorbestimmte Schwellenwert größer ist als der zweite vorbestimmte Schwellenwert.

5. Regler nach einem der vorherigen Ansprüche, **dadurch gekennzeichnet, dass** der Sitzkörper (48) ein Teil separat vom Hauptkörper (22) ist.

6. Regler nach einem der vorherigen Ansprüche, **dadurch gekennzeichnet, dass** das Regelteil (102) mechanisch einstückig mit dem Sitzkörper (48) ist, und dadurch, dass der Sockel (100) in Bezug auf das Regelteil (102) beweglich ist.

7. Regler nach Anspruch 6, **dadurch gekennzeichnet, dass** der Sockel (100) bzw. das Regelteil (102) einen Zapfen (112) umfasst, der sich radial zur Schürze (106) erstreckt, und dadurch, dass das Regelteil (102) bzw. der Sockel (100) eine periphere Kontur (132) aufweist, die mit einer Rille (134) zum Führen des Zapfens (112) ausgestattet ist, in der der Zapfen (112) positioniert ist, und dadurch, dass die Rille (134) die Haltepositionen definiert, wobei der Zapfen (112) in der Führungsrille (134) zwischen den unterschiedlichen Haltepositionen verschoben werden kann.

8. Regler nach Anspruch 7, **dadurch gekennzeichnet, dass** der Regelmechanismus (58) einen Knopf (104) zum Ändern der Position des Sockels (100) mechanisch einstückig mit dem Zapfen (100) umfasst.

9. Regler nach Anspruch 8, **dadurch gekennzeichnet, dass** die Rille (134) ein offenes Ende (146) zur Außenseite des Regelteils (102) entlang der mittleren Achse gegenüber dem Knopf (104) umfasst, dadurch, dass der Hauptkörper (22) eine Zunge (43) aufweist, die sich radial zur Umfangswand (30) erstreckt, wobei der Knopf (104) einen Spalt (152) zum Aufnehmen der Zunge (43) umfasst, in dem die Zunge positioniert ist, und dadurch, dass, wenn der Zapfen (112) am offenen Ende (146) positioniert ist, die Zunge (43) mit einem Rand des Spalts (152) in Kontakt ist, der den Knopf (104) in Position hält.

10. Regler nach einem der Ansprüche 7 bis 9, **dadurch gekennzeichnet, dass** die Führungsrille (134) eine Seite (140) aufweist, die mehrere Halteflächen (142, 144) des Zapfens entlang der mittleren Achse (Z1) voneinander versetzt bildet, wobei jede Haltefläche (142, 144) eine der Haltepositionen des Sockels (100) definiert, in der der Zapfen (112) mit der genannten Haltefläche (142, 144) in Kontakt ist.

11. Zerstäubungssystem, das ein Fluidreservoir (12), eine Düse (16) zum Zerstäuben des Fluids und einen Druckregler (14) umfasst, der zwischen dem Fluidreservoir (12) und der Zerstäubungsdüse (16) montiert ist, **dadurch gekennzeichnet, dass** der Druckregler (14) einem der Ansprüche 1 bis 10 entspricht.

## Claims

1. Pressure regulator (14), comprising:
- a device (24) for regulating the pressure of a fluid and a main body (22) having an inlet (26) for receiving the fluid, a circumferential wall (30) delimiting a housing (32) for receiving the regulating device and an outlet (28) for distributing the fluid, the regulating device (24) being positioned in the housing (32) between the inlet (26) and the outlet (28) and having:
- a seat body (48) defining an orifice (64) for passage of the fluid,
- a valve (50) which can move relative to the seat body (48) along a central axis (Z1) of the seat body (48) between a closed position, in which the valve (50) closes the orifice (64), and an open position, in which the valve (50) uncloses the orifice (64),
- a membrane (52) which is mechanically fixedly attached to the valve (50),
- a spring (56) for causing the membrane (52) to bear against the seat body (48), able to exert a bearing force on the membrane (52), the membrane beings able to move relative to the seat body (48) between an open position, in which the membrane (52) defines with the seat body a space (86) for passage of the fluid having passed through the passage orifice (64), able to guide the fluid to the outlet (28), and a closed position, in which the membrane (52) is in sealing contact with the seat body (48) and closes the passage space (86), and
- a member (58) for setting the pressure of the fluid, the setting member (58) comprising a base (100) comprising a contact wall (114) extending radially with respect to the central axis (Z1) and in contact with the spring (56), the spring (56) being positioned between the membrane (52) and the contact wall (114), **characterised in that** the setting member (58) comprises a part (102) for setting the position of the base (100) relative to the seat body (48), the setting part (102) defining at least two positions for holding the base (100) relative to the seat body (48) which are offset with respect to each other along the central axis (Z1) and corresponding to at least two different positions of the contact wall (114) relative to the seat body (48), and **in that** the base (100) comprises a skirt (106) extending along the central axis (Z1) and arranged between the circumferential wall (30) and the seat body (48), and **in that** for one of the positions for holding the base (100) the skirt (106) defines with the circumferential wall (30) or the seat body (48) a space (150) for circulation of fluid connecting the inlet (26) to the outlet (28).

2. Regulator as claimed in claim 1, **characterised in that** the setting part defines at least three positions for holding the base (100) which are offset with respect to each other along the central axis (Z1), and **in that** for two of the positions for holding the base (100) the skirt (106) is in sealing contact with the circumferential wall (30) and the seat body (48) via sealing means (78, 126).

3. Regulator as claimed in claim 1 or 2, **characterised in that** the sealing means comprise a first (78) and a second (126) sealing gasket, the seat body (48) being provided with a first peripheral groove (76) for receiving the first sealing gasket (78), which is able to bear against the skirt (106), and the skirt being provided with a second peripheral groove (124) for receiving the second sealing gasket (126), which is able to bear against the circumferential wall (30).

4. Regulator as claimed in any one of the preceding claims, **characterised in that** the spring (56) is configured such that, for a given distance over which the spring (56) extends between the membrane (52) and the contact wall (114), the movable valve (50) is in the closed position and the membrane (52) is in the open position when the fluid exerts, on the movable valve (50) and the membrane (52), a force (E1) greater than a first predetermined threshold valve, and such that the membrane (52) is in the closed position and the movable valve (50) is in the open position when the fluid exerts, on the movable valve (50) and the membrane (52), a force (E1) less than a second predetermined threshold value, the first predetermined threshold value being higher than the second predetermined threshold value.

5. Regulator as claimed in any one of the preceding claims, **characterised in that** the seat body (48) is a part separate from the main body (22).

6. Regulator as claimed in any one of the preceding claims, **characterised in that** the setting part (102) is mechanically fixedly attached to the seat body (48), and **in that** the base (100) can be moved relative to the setting part (102).

7. Regulator as claimed in claim 6, **characterised in that** the base (100) or the setting part (102) comprises a pin (112) extending radially with respect to the skirt (106), **in that** the other of the setting part (102) or the base (100) comprises a peripheral contour (132) provided with a channel (134) for guiding the pin (112), the pin (112) being positioned within the channel, and **in that** the channel (134) defines the holding positions, the pin (112) being movable in the guiding channel (134) between the different holding positions.

8. Regulator as claimed in claim 7, **characterised in that** the setting member (58) comprises a button (104) for modifying the position of the base (100), which button is mechanically fixedly attached to the base (100).

9. Regulator as claimed in claim 8, **characterised in that** the channel (134) comprises an end (146) which is open to the exterior of the setting part (102) along the central axis facing the button (104), **in that** the main body (22) comprises a tab (43) extending radially with respect to the circumferential wall (30), the button (104) comprising a slot (152) for receiving the tab (43), the tab being positioned within the slot, and **in that** when the pin (112) is positioned at the open end (146) the tab (43) is in contact with an edge of the slot (152) which holds the button (104) in place.

10. Regulator as claimed in any one of claims 7 to 9, **characterised in that** the guiding channel (134) comprises a side (140) forming several surfaces (142, 144) for holding the pin which are offset with respect to each other along the central axis (Z1), each holding surface (142, 144) defining one of the positions for holding the base (100), in which the pin (112) is in contact with said holding surface (142, 144).

11. Spraying system comprising a fluid reservoir (12), a nozzle (16) for spraying the fluid and a pressure regulator (14) mounted between the fluid reservoir (12) and the spraying nozzle (16), **characterised in that** the pressure regulator (14) is as claimed in any one of claims 1 to 10.
